# EUROPEAN PATENT APPLICATION

(11) **EP 4 663 454 A1**
(43) Date of publication of application: **17.12.2025**
(21) Application number: 25178052.4
(22) Date of filing: 21.05.2025
(51) Int. Cl.: B60K 35/10

(54) **HUMAN MACHINE INTERFACE WITH PROXIMITY SENSING**

(30) Priority: 10.06.2024 GB 202408266
(71) Applicant: AGCO International GmbH, 8212 Neuhausen am Rheinfall (CH)
(72) Inventor: VONROTH, Daniel, 87616 Marktoberdorf (DE)
(74) Representative: AGCO Intellectual Property Department

(57) **Abstract**

A human machine interface (106) for controlling an agricultural machine (102) is equipped with a first input element (206) being distant from a reference point (228) and a second input element (216) being more distant from the reference point (228) than the first input element (206). Proximity sensors (110) of the first input element (206) and the second input element (216) are configured for determining an approaching hand (602). A control unit (226) may execute a method for checking whether the approaching hand (602) is in a far distance (608) or a close distance (610).

## Description

### FIELD

The present disclosure relates generally to a human machine interface (HMI) with proximity sensing. The human machine interface may be used for controlling a vehicle such as an agricultural machine.

### BACKGROUND

European patent application EP 4 122 738 A1, "Configurable User Interface," published on January 25, 2023, discloses a human machine interface for an agricultural machine comprising several input elements including a control lever, a joystick, a control knob, a touch sensitive screen and a console keypad with control keys. One or more of the control keys are equipped with a proximity sensor operable to detect an approaching of a finger of the operator towards the control key before the finger gets in contact with the control key.

### BRIEF SUMMARY

It is beneficial to provide a human machine interface configured to detect when a hand of an operator approaches two or more input elements and a control strategy to select one input element out of the two or more input elements to execute a function assigned to the corresponding input element.

According to an aspect of the invention there is provided a human machine interface for controlling an agricultural machine. The human machine interface comprises a first input element being distant from a reference point and a second input element being more distant from the reference point than the first input element. The human machine interface also comprises at least one proximity sensor configured to determine a distance between an approaching hand and the first and/or second input element. The human machine interface further comprises a control unit configured to check for each input element whether the approaching the hand is in a far distance or a close distance.

The agricultural machine may be of any type such as an agricultural vehicle as for example a tractor, a harvester, a sprayer, a combine etc. or any combination of a vehicle and an implement connected to the vehicle. An operator may use the human machine interface to control the vehicle, e. g. to steer, accelerate or brake the vehicle, and/or to control an implement or tool of the agricultural machine, e. g. to (de-)activate the implement, to adjust any settings of the implement, e. g. a height of the implement over the ground, an operating speed of the implement, etc. Each function of the agricultural machine may be assigned to an input element of the human machine interface so that each function may be controlled separately by the operator. When the operator touches and operates two input elements simultaneously, two functions may be executed in parallel. Each input element may be of any type such as a control lever, a joystick, a control knob, a rocker, or a control key. Several input elements, for example keys, may be arranged in a group to provide a keypad for example. The reference point may be a virtual point and may be close to a position where the operator may hold his arm when he uses the human machine interface. For example, the reference point may be a predefined position located on an arm support on which the operator may rest his arm when he operates the human machine interface.

The proximity sensor may be a single sensor or a combination of multiple sensors. For example, the proximity sensor may be an optical sensor such as a camera arranged anywhere in the agricultural machine, for example above the input elements. Based on the imaged captured by the camera, the control unit may determine the distances between the hand and all input elements of the human machine interface the hand is approaching. Alternatively, each of the input elements may comprise an integrated proximity sensor so that each of the input elements, including the first and second input elements, may be configured to detect an approaching hand and to determine the corresponding distance between both. The proximity sensor(s) may determine an approaching hand including all of its fingers. Hence, a first proximity sensor may determine an approaching hand if one of its fingers enters a sensor range of the first proximity sensor and a second proximity sensor may determine the same approaching hand if one of its other fingers enters a sensor range of the second proximity sensor. The control unit may receive the sensor signals of all proximity sensors and may determine for each proximity sensor detecting an approaching hand whether the approaching hand is in far or close distance to that proximity sensor. A close distance may be determined if the distance between the hand and the input element falls below a predefined distance threshold. The distance threshold may be an adjustable parameter and may be changed by the operator of the agricultural machine. For example, the distance threshold may be less or equal to 3 mm. Accordingly, a far distance may be determined by the control unit if the distance between the approaching hand and the input element is greater than the distance threshold. The far distance may be smaller than or extend up to the sensing range of the corresponding proximity sensor. When a hand approaches two or more input elements of the human machine interface, the control unit may detect that the hand is in far distance to the input elements. While the hand is still moving, the control unit may detect at once the hand is in close distance to one of the input elements to select this input element out of the two or more input elements for executing a function assigned to the corresponding input element.

The control unit may be configured for executing a function assigned to the input element to which the approaching hand is in close distance.

I. e., the control unit may execute a function assigned to the selected input element. The function may be executed before the hand touches, i. e. haptically operates, the input element. The presence of the hand in close distance to the input element may be sufficient for triggering the execution of the function. The function and the assignment to the corresponding input element may be stored in a memory of the control unit. The function may be any function to control the vehicle or an implement of the agricultural machine.

The control unit may be configured for omitting an execution of a function assigned to the first input element to which the approaching hand may be in close distance if the approaching hand is in far distance to the second input element.

According to this constraint, the execution of a function of an input element (different to the second input element) to which the approaching hand is in close distance may apply only when the hand is out of far distance of the second input element. For example, the hand may be out of far distance to the second input element when the hand is out of the sensing range of the second input element. Hence, the second input element has a higher priority compared to the first input element so that the function of the first input element may not be (immediately) executed by the control unit when the approaching hand is in close distance to the first input element while the hand is simultaneously in far distance to the second input element.

The control unit may be configured to determine a touch of the first input element and execute the function assigned to the first input element in response to the touch irrespectively if the approaching hand is in far distance to the second input element.

I. e, the higher priority of the second input element in respect of the first input element may be void if a touch of the first input element is detected. For example, the operator may press a key as a first input element with his finger to execute the function assigned to the first input element while the control unit determines that his hand is in far distance to the second input element.

The control unit may be configured for executing a function assigned to the second input element if the approaching hand is in close distance to the first input element and the second input element.

I. e., the second input element may have higher priority compared to the first input element when the hand is in a close distance of both input elements simultaneously. The control unit may execute the function assigned to the second input element without subsequent execution of the function assigned to the first input element. Based on such kind of prioritization, the control unit may clearly decide which function is triggered to be executed. For example, the approaching hand is in close distance to the first input element and in far distance to the second input element. As mentioned above, neither the function assigned to the first input element nor the function assigned to the second input element may be executed. So, it may depend on whether the hand may touch the first input element before getting in close distance to the second input element to execute the function assigned to the first input element or whether the hand may get in close distance to the second input element before touching the first input element to execute the function assigned to the second input element. But both input elements may have same priority if the hand is in far distance of both input elements.

The control unit may be configured to determine a signal indicative of a distance between an input element and the approaching hand.

The control unit may receive a signal from the proximity sensor when an approaching hand enters the sensing range of the proximity sensor. The signal may increase the more the closer the hand approaches to the input element. The control unit may determine that the hand is in far distance to the input element if a corresponding first signal threshold has been exceeded by the signal. The control unit may determine that the hand is in close distance to the input element if a corresponding second signal threshold has been exceeded by the signal. Based on the signal, the control unit may also determine a distance between the hand and any one of the input elements.

The human machine interface may comprise an arm support for resting an arm of the operator. The first input element may be located in a first approaching zone. The second input element may be located in a second approaching zone. The first approaching zone and the second approaching zone may be reachable by the hand of the operator with his arm resting on the arm support. The control unit may be configured for determining whether the input element determining the approaching hand is located in a first approaching zone or in the second approaching zone.

The different approaching zones may be used to prioritize the input elements differently. For example, input elements assigned to the second approaching zone may have a higher priority than input elements assigned to the first approaching zone. The assignment of an input element to an approaching zone may be stored in the memory of the control unit. An assignment may be changed by the operator to assign an input element to another approaching zone. Analogously as mentioned above, the different prioritizations may be a decision basis for the control unit to clearly decide which function may be triggered to be executed. For example, the approaching hand is in close distance to an input element of the first approaching zone and in far distance to an input element of the second approaching zone. Although the hand is closer to the input element of the first approaching zone, neither the function assigned to the first input element nor the function assigned to the second input element may be executed. So, it may depend on whether the hand may touch the input element of the first approaching zone before getting in close distance to the input element of the second approaching zone to execute the function assigned to the input element of the first approaching zone or vice versa.

The first approaching zone may be ring-segment shaped and concentric to the reference point. The second approaching zone may be ring-segment shaped and concentric to the reference point and of a greater reach than the first approaching zone.

Due to the ring-segment shaped and concentric arrangement of the first and second approaching zone in respect of the reference point, an equidistant arrangement of input elements located in the same approaching zone may be provided. I. e., a distance between an input element and the reference point may be the same for all input elements located in the same approaching zone. The second approaching zone may have a greater radius in respect of the reference point than the first approaching zone so that the distance of the second approaching zone to the reference point is greater than the distance of the first approaching zone. So, the operator may reach out his hand more to touch an input element of the second approaching zone than an input element of the first approaching zone when his arm is resting on the reference point. But he may easily pivot his arm to touch another input element of the same approaching zone without to reach out his hand further.

The human machine interface may comprise a third input element being located in the second approaching zone. The control unit may be configured for executing a function assigned to the second input element if the approaching hand is in close distance to the third input element and to the second input element, and if a distance between the second input element and the approaching hand is smaller than a distance between the third input element and the approaching hand.

Thus, the control unit may be configured to decide which function of which key will be executed if the hand is in close distance to two (or more) input elements of the same approaching zone, here the second approaching zone. The smaller the distance between the hand and an input element becomes, the stronger may be the signal of the proximity sensor received by the control unit. So, the control unit may easily determine different distances between the hand and two input elements based on the different signal strengths representing the different distances accordingly.

The first input element may be part of a first control module. The second input element may be part of a second control module. The control unit may be configured for determining whether the input element determining the approaching hand is part of the first control module or part of the second control module.

The first and the second control module may be operated by the operator independently from each other. For example, the operator may grab the first control module for controlling the vehicle and later on the second control module for controlling the implement of the agricultural machine. The assignment which input element is part of which control module may be stored in the memory of the control unit.

The human machine interface may comprise a fourth input element being part of the second control module. The control unit may be configured for executing a function assigned to the second input element if the approaching hand is in close distance to the fourth input element and to the second input element, and if a distance between the second input element and the approaching hand is smaller than a distance between the fourth input element and the approaching hand.

Thus, the control unit may be configured to decide which function of which key will be executed if the hand is in close distance to two (or more) input elements of the same control module, here the second control module. The smaller the distance between the hand and an input element becomes, the stronger may be the signal of the proximity sensor received by the control unit. So, the control unit may easily determine different distances between the hand and two input elements based on the different signal strengths representing the different distances accordingly.

When the operator reaches out his hand to one of the two control modules to grab it, his hand may get in close distance to an input element of the first control module and simultaneously to an input element of the second control module. To avoid that a function of an input element of a control module other than the control module the operator intends to grab is executed, the control unit also checks the distances between the input element of the first control module and the input element of the second control module. The control unit may determine the control module intended to be grabbed by the operator based on the input element having the smaller distance to the hand. Then, the control unit may execute the function of the input element of the control module having the smaller distance to the hand instead of the input element of the other control module.

The first and/or the second control module may be a button control module, a rocker control module, a joystick control module, a knob control module or a lever control module.

A control module may combine two or more input elements in one mechanical device. For example, the first control module may be a joystick comprising a keypad. The second control module may be a lever comprising a button (key). The button control module may comprise several buttons / keys as input elements.

The human machine interface may comprise a sensor configured to detect whether an operator is seated in the agricultural machine. The control unit may be configured for activating a proximity function for determining an approaching hand by the first input element and the second input element if an operator is seated, and deactivating the proximity function if the operator is not seated.

The proximity sensor, for example in case of a camera, may be used as sensor configured to detect whether an operator is seated in the agricultural machine. Alternatively, a separate sensor may be used. For example, a weight sensor or an operator presence sensor may integrated in a seat of the agricultural machine to determine presence of a seated operator. The sensor configured to detect whether an operator is seated may be used to detect an unintentional operation of an input element and to prevent an execution of a function assigned to this input element. For example, when the operator enters or leaves the agricultural machine, his hand may get unintentionally in close distance to an input element without being seated.

The human machine interface may comprise a sensor configured to detect whether an arm is resting on an arm support of the human machine interface. The control unit may be configured to activate a proximity function for determining an approaching hand by the first input element and the second input element if an arm on the arm support is be detected, and deactivating the proximity function if an arm on the arm support is not detected.

The proximity sensor, for example in case of a camera, may be used as sensor configured to detect whether an arm is resting on an arm support of the human machine interface. Alternatively, a separate sensor, such as a (capacitive) touch sensor for example, may be integrated in the arm support to determine an arm resting on the arm support. The sensor may be integrated at the position of the reference point. The sensor configured to detect whether an arm is resting on the arm support may be used to detect an unintentional operation of an input element and to prevent an execution of a function assigned to this input element. Hence, the operator may remove his arm from the arm support when he intends to interrupt controlling of the agricultural machine and the control unit may ignore any approaching hand coming in close distance to an input element of the human machine interface.

Another aspect includes a method of determining an operator input on a human machine interface comprising a first input element configured to determine an approaching hand and a second input element configured to determine the approaching hand. The method comprises acts for checking whether the approaching hand is in a far distance or a close distance to the first input element, and checking whether the approaching hand is in a far distance or a close distance to the second input element.

As disclosed above, the control unit is configured to execute different actions. Each action may be implemented as one or more method acts of the method executable by the control unit. Hence, each action for which the control unit is configured to execute may be defined as a method act.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 shows an agricultural machine with a human machine interface.
FIG. 2 shows an example of a human machine interface.
FIG. 3 illustrates a schematic block diagram of a human machine interface.
FIG. 4 illustrates a simplified view of a control unit.
FIG. 5 illustrates a flow chart of a method executable by the control unit of FIG. 4.
FIG. 6A illustrates a hand approaching an input element of the human machine interface.
FIG. 6B illustrates a bar diagram of different signal strengths.
FIG. 7A illustrates a hand approaching an input element of the human machine interface.
FIG. 7B illustrates a bar diagram of different signal strengths.
FIG. 8A illustrates a hand approaching an input element of the human machine interface.
FIG. 8B illustrates a bar diagram of different signal strengths.
FIG. 9A illustrates a hand approaching an input element of the human machine interface.
FIG. 9B illustrates a bar diagram of different signal strengths.
FIG. 10A illustrates a hand approaching an input element of the human machine interface.
FIG. 10B illustrates a bar diagram of different signal strengths.
FIG. 11A illustrates a hand approaching an input element of the human machine interface.
FIG. 11B illustrates a bar diagram of different signal strengths.

### DETAILED DESCRIPTION

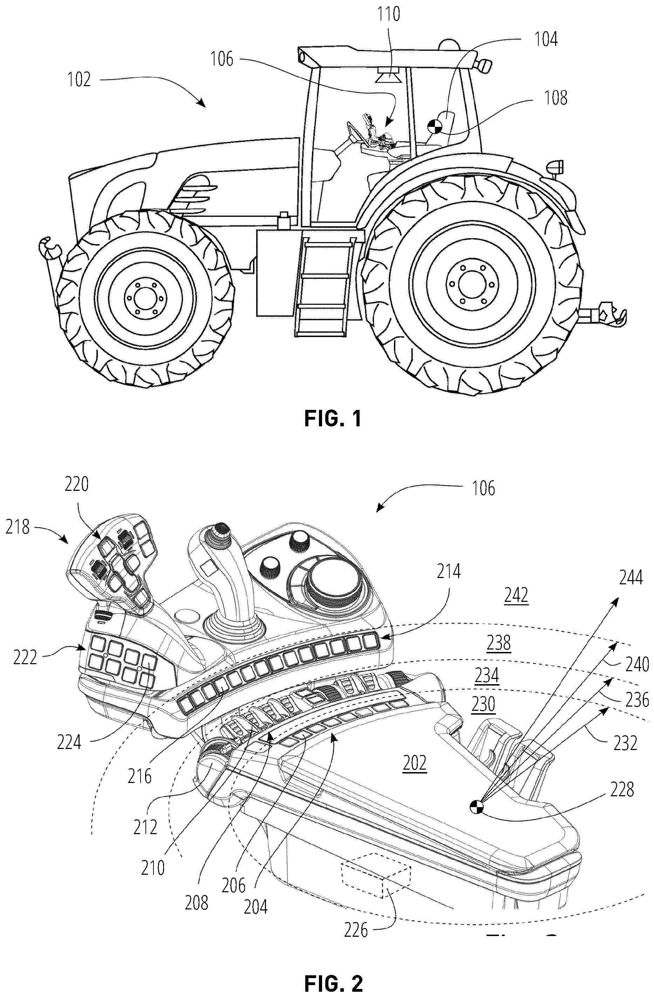

FIG. 1 shows an agricultural machine 102. The agricultural machine 102 may be a vehicle or a vehicle-implement combination. The vehicle may generate a tractive force to tow the implement through an agricultural field. The implement may be fixed to the vehicle or detachably connected with the vehicle. The vehicle may be an agricultural vehicle such as a tractor, a harvester, a combine, a sprayer or of any other type such as a truck. The implement may be used for an operation in the agricultural field and may be of the type of a plough, a rake, a planter, a sprayer, a mower, a trailer, etc. Depending on the type of the implement, the implement may comprise one or more tools such as a rake rotor, a mower knife, a seeding unit, a spray nozzle, a shovel, a dumper, etc.

The agricultural machine 102 comprises a seat 104 and a human machine interface 106 with a proximity sensor 110. The proximity sensor 110 is attached to the top of a cabin roof of the agricultural machine 102. An operator may operate the human machine interface 106 to control the agricultural machine 102 while sitting on the seat 104. The seat 104 may optionally comprise a sensor configured to detect whether an operator is seated. This sensor may be a weight sensor for example to determine presence of a seated operator and may be part of the human machine interface 106.

The human machine interface 106 comprises several input elements for executing different functions of the agricultural machine 102 (see FIG. 2). For example, the operator may control vehicle dynamics (accelerating, braking, steering) or any function of the implement connected with the vehicle. The proximity sensor 110 detects the distances between a hand of the operator and the input elements of the human machine interface 106. The proximity sensor 110 may be an optical sensor such as a (stereo) camera or a time-of-flight (ToF) camera. A ToF camera could provide depth information to determine the distance between the hand of the operator and an input element.

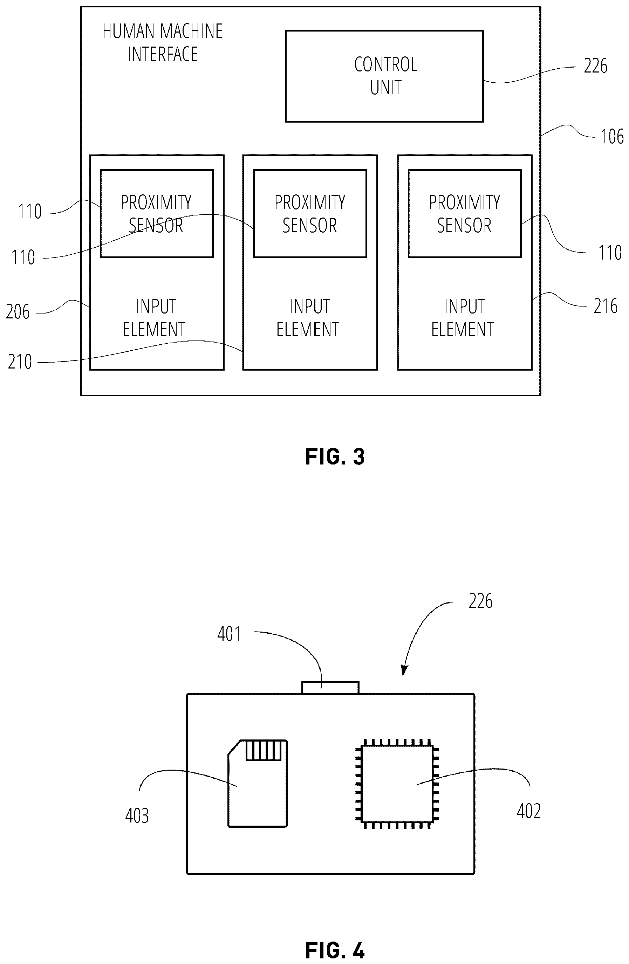

FIG. 2 shows an example of the human machine interface 106 in more detail. FIG. 3 shows a simplified block diagram of the human machine interface 106. The human machine interface 106 comprises several input elements 206, 210, 212, 216, 220, 222 and 224. Input element 206 is a button or key, input element 210 is a rocker, input element 212 is a potentiometer, input element 216 is a button or key, input element 220 is a button / key integrated in a joystick, input element 222 is a keypad integrated in the joystick comprising several keys as input element 224. Input elements 220, 222 and 224 are arranged in a control module 218 comprising the joystick and the input elements 220, 222 and 224. A control module 214 comprises the input element 216 and additional keys of the type of the input element 216. Control module 208 comprises the input element 210 and additional rockers of the type of input element 210. Control module 204 comprises the input element 206 and additional input elements of the type of input element 206. Depending on which type of input elements are covered by a control module, the control module may be a button control module, a rocker control module, a joystick control module, a knob control module or a lever control module. For example, control module 204 is a button control module, control module 208 is a rocker control module, control module 214 is another button control module and control module 218 is a joystick control module.

Each input element may be assigned to a function to control the agricultural machine 102. For example, driving speed of the agricultural machine 102 may be adjusted by a rocker of control module 208. For example, any actuator of the vehicle or implement may be switched on or off or adjusted in any other way by an input element of the control module 204, control module 214 or control module 218 to adjust the height of the implement over ground, to (de-)activate an air conditioner, to (de-)activate a light, to adjust a speed limit, to adjust a speed of a power take-off (PTO), etc.

An arm support 202 is part of human machine interface 106. The operator may rest his arm on the arm support 202 while operating the input elements of the human machine interface 106 for a relaxed operation of the agricultural machine 102. A sensor configured to detect whether an arm is resting on the arm support 202 may detect the presence of an arm of an operator on the arm support 202. The sensor may be a (capacitive) touch sensor for example and may be integrated in the arm support 202 at a reference point 228.

The reference point 228 is defined on the arm support 202. The reference point 228 is a virtual point and may be located close to an elbow when the operator rests his arm on the arm support 202. Another reference point 108 may be defined at the seat 104 (see FIG. 1). As can be seen in FIG. 2, different approaching zones 230, 234, 238 and 242 can be defined in respect of the reference point 228. A first ring-segment shaped approaching zone 230 is defined by a radius 232 extending from the reference point 228. The first approaching zone 230 covers a circular area covering the input elements of the control module 204 such as input element 206. A second ring-segment shaped approaching zone 234 concentrically arranged to the first approaching zone 230 is defined by a radius 236 and covers a circular area covering the input elements of the control module 208 such as input element 210. A third ring-segment shaped approaching zone 238 concentrically arranged to the first and second approaching zones 230, 234 is defined by a radius 240 and covers a circular area covering the input elements of the control module 214 such as input element 216. A fourth ring-segment shaped approaching zone 242 concentrically arranged to the first, second and third approaching zones 230, 234 and 238 is defined by radius 244 and covers an area beyond the third approaching zone 238 covering the input elements of control module 218 and additional modules such as input elements 220, 222 and 224. The radii 232, 236, 240 and 244 have different lengths and increase from an approaching zone being closer to the reference point 228 to an approaching zone being more distant to the reference point 228. Thus, input elements of different approaching zones have different distances to the reference point 228. For example, the distance between input element 216 of approaching zone 238 and reference point 228 is greater than the distance between input element 206 of approaching zone 230 and reference point 228.

Since the input elements covered by the same approaching zone are equidistantly arranged in respect of the reference point 228, the input elements of a same approaching zone are in the same reach of the hand of the operator resting his arm on the arm support 202. Thus, it is sufficient that the operator pivots his arm about the reference point 228 to touch one or another of the input elements of the same approaching zone. The operator does not need to reposition or lift his arm from the arm support 202 to reach out to different input elements of the same approaching zone. Moreover, additional approaching zones can be defined in respect of the reference point 108 (see FIG. 1).

FIG. 3 shows a simplified block diagram of the human machine interface 106 with a control unit 226 and input element 206, input element 210 and input element 216. Each of the three input elements 206, 210 and 216 comprises a proximity sensor 110 for detecting an approaching hand or finger of the operator. The proximity sensors 110 of the three input elements 206, 210 and 216 may be of the same type and may be selected from the group of a capacitive proximity sensor, a photoelectric proximity sensor or an inductive proximity sensor, for example. Each proximity sensor 110 is configured to detect a distance between the input element comprising the corresponding proximity sensor 110 and a hand (including the fingers) of the operator intruding the sensing range of the corresponding proximity sensor 110. When a proximity sensor 110 detects an approaching hand, a signal is generated representing the distance and sent to the control unit 226. Based on the received signal, the control unit 226 can determine whether the approaching hand is in far or close distance to the corresponding input element. This can be done for each input element separately. Analogously to the three input elements 206, 210 and 216, all other input elements of the human machine interface 106 may be equipped with a proximity sensor 110 and connected with the control unit 226. The proximity sensors 110 of the three input elements 206, 210 and 216 may be alternative sensors or additional sensors in respect of the proximity sensor 110 shown in FIG. 1.

FIG. 4 shows the control unit 226 in more detail. The control unit 226 comprises an I/O interface 401, a controller 402 and a memory 403. The I/O interface 401, the controller 402 and the memory 403 may be attached to a printed circuit board (PCB). The control unit 226 may receive and send signals or data via the I/O interface 401. The I/O interface 401 may be a wireless interface or a connector. Each input element of the human machine interface 106 and each proximity sensor 110 is connected to the I/O interface 401 so that the controller 402 receives any signal generated due to an operation of an input element or due to a detection of an approaching hand. The control unit 226 is also connected with any actuator of the agricultural machine 102 to control a corresponding actuator in response to a manual input to the human machine interface 106. The controller 402 may store the data or signals received by the control unit 226 in the memory 403. The memory 403 may contain additional data or executable computer program products, for example in terms of a computer-implemented method, that may be retrieved, processed or executed by the controller 402. Data or signals resulting from the processing of data or signals or from the execution of a computer program product may be stored to the memory 403 or sent to the I/O interface 401 by the controller 402.

The control unit 226 may be integrated anywhere in the agricultural machine 102, for example in a housing of the human machine interface 106 as shown in FIG. 2 or outside of the human machine interface 106.

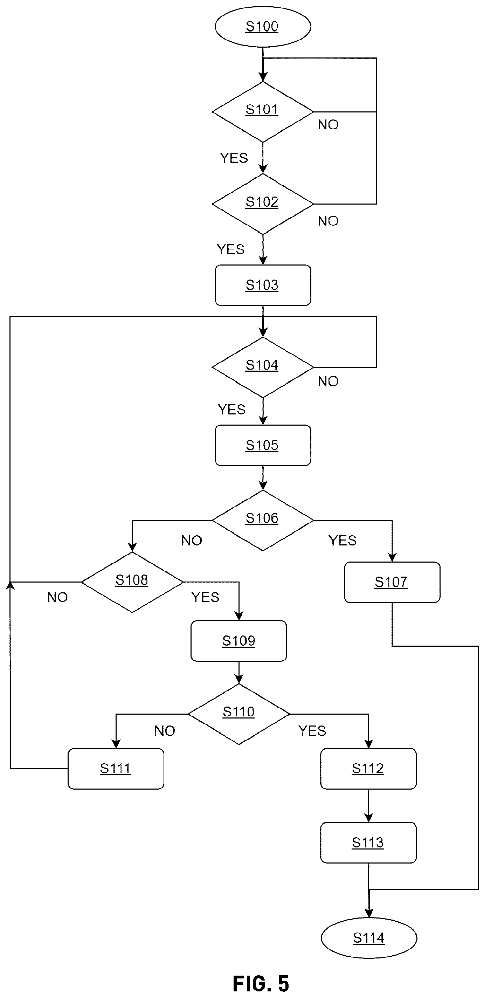

FIG. 5 shows a flow chart of a method of determining an operator input on the human machine interface 106. The method may be at least partly a computer-implemented method stored as a computer program product in the memory 403 of the control unit 226. The control unit 226 is configured to carry out the method. Computer-implemented parts of the method may be executed by the controller 402 of the control unit 226. Non-computer-implemented parts of the method may be executed manually or by other components of the agricultural machine 102. The method is described by way of example of several acts without any restriction in respect of these acts. That is, the number or the order of acts may be adapted, for example single acts may be excluded and/or added and executed earlier or later than described. The method starts at act S100 and proceeds to act S101.

Act S101 is an optional act and may be skipped by the control unit 226. If executed, the control unit 226 checks whether an operator is seated on the seat 104. If not, the control unit 226 deactivates the proximity function of each proximity sensor 110 configured to detect an approaching hand. Then, the method returns to act S101 again. If an operator sits on the seat 104, the control unit 226 receives a corresponding signal from the sensor configured to detect whether an operator is seated. Then, the method proceeds to act S102.

Act S102 is an optional act and may be skipped by the control unit 226. If executed, the control unit 226 checks whether an arm of the operator is resting on the arm support 202. If not, the control unit 226 deactivates the proximity function of each proximity sensor 110 configured to detect an approaching hand. Then, the method returns to act S101 again. If the arm of the operator rests on the arm support 202, the control unit 226 receives a corresponding signal from the sensor configured to detect whether an arm is resting on the arm support 202. Then, the method proceeds to act S103.

At act S103, the control unit 226 activates the proximity function for each proximity sensor 110 to determine an approaching hand. In dependence of whether act S101 or act S102 has been skipped, the activation may be done in response to the received signals from the sensor configured to detect whether an operator is seated and/or from the sensor configured to detect whether an arm is resting on the arm support 202. If both acts have been skipped, the control unit 226 may activate the proximity function directly. Then, the method proceeds to act S104.

At act S104, the control unit 226 checks whether a hand approaching to one of the input elements has been detected. The approaching hand 602 may be detected by a single proximity sensor 110 as shown in FIG. 1 and/or by proximity sensors 110 integrated in the input elements as show in FIG. 3. For reasons of better understanding, the functionality of proximity sensing will be exemplarily explained based on the proximity sensors 110 integrated in the input elements in the following disclosure. But the functionality of proximity sensing may be applied analogously by the proximity sensor 110 of FIG. 1.

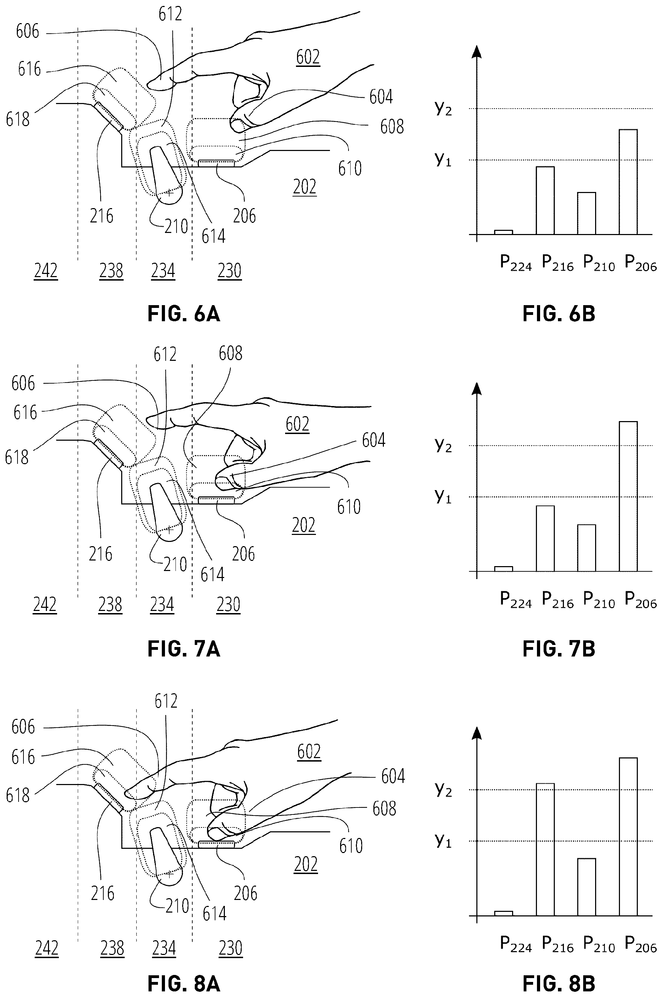

If the hand 602 has been detected by a proximity sensor 110, the control unit 226 receives a corresponding signal from the corresponding proximity sensor 110. Then, the method proceeds to act S105. If not, the method repeats act S104 until the control unit 226 receives a signal from at least one proximity sensor 110. For example, the operator may move his hand 602 over the human machine interface 106 approaching the input elements 206, 210 and 216 as shown in FIG. 6A so that the hand 602 intrudes into the sensing ranges of the proximity sensors 110 of the input elements 206, 210 and 216. In response to this movement, the proximity sensors 110 of the input elements 206, 210 and 216 detect the presence of the hand 602 and send each a signal to the control unit 226 as illustrated in FIG. 6B. Thus, the control unit 226 receives a signal from each proximity sensor 110 indicative of a distance between the corresponding input element 206, 210, 216 and the approaching hand 602: signal P₂₀₆ representing the distance between the hand 602 and the input element 206, signal P₂₁₀ representing the distance between the hand 602 and the input element 210 and signal P₂₁₆ representing the distance between the hand 602 and the input element 216. The closer the hand 602 gets to an input element the more increases the signal P sent from the proximity sensor 110 to the control unit 226. If the signal P of a proximity sensor 110 of an input element exceeds a first threshold y1 then the hand 602 is in far distance to the corresponding input element. If the signal P of a proximity sensor 110 of an input element exceeds a second threshold y2 then the hand 602 is in close distance to the corresponding input element (see FIG. 6B, FIG. 7B, FIG. 8B, FIG. 9B, FIG. 10B and FIG. 11B).

Although the hand 602 is out of the sensing range of the proximity sensor of the input element 224, the control unit 226 may also receive a very weak signal P₂₂₄ as a test signal to check that the proximity sensor of the input element 224 is still alive (has not failed). But this signal P₂₂₄ is not considered as a distance between the hand 602 and the input element 224 by the control unit 226 as long as this signal does not increase.

At act S105, the control unit 226 determines based on the received signal from the proximity sensor 110 whether the hand approaching to the input element is in far or in close distance to the input element. As can be seen in FIG. 6A, the hand 602 is in far distance 608 to the input element 206 but not yet in close distance 610. Hence, the signal P₂₀₆ exceeds the first threshold y1 indicating far distance but not the second threshold y2 indicating close distance. In contrast, finger 606 of the hand 602 is not close enough to the input element 216 so that signal P₂₁₆ would exceed the first threshold y1. Hence, the control unit 226 determines that the hand 602 is out of far distance 616 to the input element 216. The same applies to input element 210 and signal P₂₁₀.

The method proceeds to act S106 and the control unit 226 checks whether one of the input elements has been touched. I. e., the operator has not only moved his hand in far or close distance to the input element but also had a real contact with the input element for a haptical operation thereof. For example, the control unit 226 checks whether a button has been manually pressed or whether a rocker has been deflected (after the hand 602 moved in far or close distance to the corresponding input element without having a contact) based on a received signal in response to a corresponding pressing or deflecting of the input element. If the input element has been touched, the method proceeds to act S107. Otherwise, the method proceeds to act S108.

At act S108, the control unit 226 checks whether the hand 602 is in close distance to any one of the input elements. If so, the method proceeds to act S109. If not, the method returns to act S104.

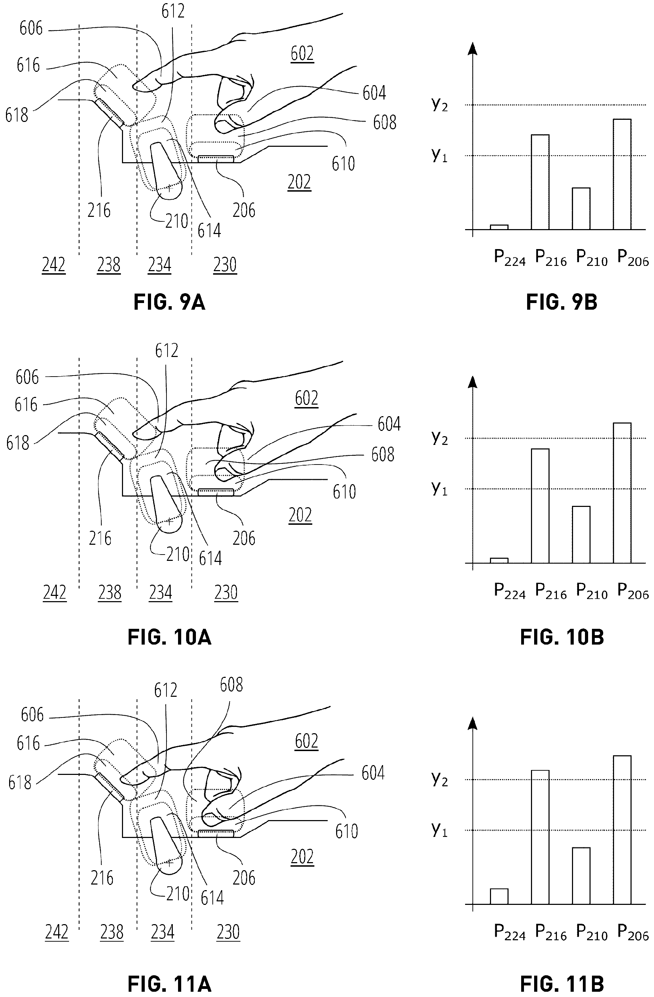

Since the hand 602 as shown in FIG. 6A is in far distance to input element 206 but not in close distance to any one of the other input elements, the method would return to act S104 without execution of any function assigned to an input element. But the operator may move his hand 602 from the position shown in FIG. 6A to a position as shown in FIG. 7A or to a position as shown in FIG. 9A.

If the operator has moved his hand 602 to a position as shown in FIG. 7A, his hand 602 is in close distance 610 to input element 206 but still out of far distance 612 to input element 210 and out of far distance 616 to input element 216. Hence, signal P₂₀₆ exceeds the second threshold y2 (see FIG. 7B). The control unit 226 receives the signal P₂₀₆ and determines that the hand 602 is in close distance 610 to the input element 206 (according to act S105). A touch of any of the input elements will not be detected (according to act S106). But the control unit 226 determines that the finger 604 of his hand 602 is in close distance 610 to the input element 206 (according to act S108) so that the method proceeds to act S109.

At act S109, the control unit 226 determines the input element having the greatest distance to the reference point 228 (or alternatively to the reference point 108) out of all input elements to which the hand 602 is in far distance or close distance. As can be seen in FIG. 7A, the hand 602 is in far or close distance to one input element only, here input element 206 since finger 606 is out of far distance 612 to input element 210 and out of far distance 616 to the input element 216. So, control unit 226 determines input element 206 as the input element having the greatest distance to the reference point 228 (or alternatively to the reference point 108) out of all input elements to which the hand 602 is in far distance or close distance. Then, the method proceeds to act S110.

At act S110, the control unit 226 checks whether the hand 602 of the operator is in close distance to the input element determined at act S109. If so, the method proceeds to act S112. If the hand 602 is in far distance to the input element determined at act S109, then the method proceeds to act S111.

As shown in FIG. 7A, the hand 602 is in close distance 610 to the input element determined at act S109, here input element 206. So, the control unit 226 determines that the hand 602 of the operator is in close distance to the input element 206. In response, this input element is defined as the "most distant closely approached input element". Consequently, the method proceeds to act S112.

At act S112, the control unit 226 determines the approaching zone and/or the control module of the most distant closely approached input element, here input element 216. Additionally, the control unit 226 determines all other input elements of the same approaching zone and/or same control module to which the hand 602 is close distance. The information about the assignment of each input element to an approaching zone and/or the assignment of each input element to a control module is saved in the memory 403 of the control unit 226 and can be retrieved by the controller 402.

Hence, the control unit 226 can determine that the most distant closely approached input element, here input element 206, is located in approaching zone 230 and/or is part of the control module 204 (see FIG. 2). Then, the control unit 226 determines all other input elements of the same approaching zone 230 to which the hand 602 is in close distance and/or all other input elements of the same control module 204 to which the hand 602 is in close distance. Then, the method proceeds to act S113.

For each of the most distant closely approached input element and the other input elements determined at act S112, the control unit 226 receives a signal P representing the proximity of the hand 602 to the corresponding input element. The closer the hand 602 is to the input element the more is the signal P increased. I. e., analogously to signal P₂₀₆ as shown in FIG. 7B, the control unit 226 receives signals P for the other input elements determined at act S112.

At act S113, the control unit 226 determines the strongest signal out of the signals received at act S112 and the input element to which the strongest signal is assigned. I. e., the control unit 226 determines the input element out of all input elements being part of the same approaching zone and/or control module of the most distant closely approached input element to which the hand 602 is in closest proximity. This input element may be the most distant closely approached input element itself or one of the other input elements determined at act S112. Then, the control unit 226 executes the function assigned to the input element to which the strongest signal is assigned. The function may be stored in the memory 403 of the control unit 226 and the controller 402 of the control unit 226 may read out the function for execution. The function may be any function as explained above. So, the function may (de-)activate any actuator or component of the agricultural machine or may control any actuator of the vehicle or implement of the agricultural machine, for example to adjust a height of the implement over the ground. After act S113, the method proceeds to act S114.

Acts S112 and S113 may be optional acts and may be skipped by the control unit 226. Then, the control unit 226 executes after act S110 the function of the most distant closely approached input element before the method proceeds to act S114.

Instead of moving his hand 602 from a position as shown in FIG. 6A to a position as shown in FIG. 7A, the operator may have moved his hand to a position as shown in FIG. 9A. Then, his hand 602 is in far distance 608 to the input element 206 and simultaneously in far distance 616 to the input element 216. Correspondingly, signal P₂₀₆ exceeds the first threshold y1 and signal P₂₁₆ exceeds the first threshold y1, too (see FIG. 9B). So, the control unit 226 determines that the hand 602 is in far distance 608 to the input element 206 and in far distance 616 to input element 216 (according to act S105). Since the control unit 226 determines neither a touch (according to act S106) nor a presence of the hand in close distance to one of the input elements (according to act S108), the method returns to act S104 without execution of any function again.

Then, the operator may move his hand 602 to a position as shown in FIG. 10A where his hand 602 is in close distance 610 to the input element 206 and in far distance 616 to the input element 216. Correspondingly, signal P₂₀₆ exceeds the second threshold y2 and signal P₂₁₆ exceeds the first threshold y1. The hand 602 approaches a little bit input element 210 but does not get in far distance 612 to input element 210. Hence, signal P₂₁₀ does not exceed the first threshold y1 (see FIG. 10B). So, the control unit 226 determines that the hand 602 is detected by the proximity sensor 110 (according to act S104) and that the hand 602 is in close distance 610 to the input element 206 and in far distance 616 to input element 216 (according to act S105). The control unit 226 detects no touch of one of the input elements according to act S106 so that the method proceeds to act S108.

At act S108, the control unit 226 determines that the hand 602 is in close distance to the input element 206 based on signal P₂₀₆ (see FIG. 10B). Since a presence of the hand 602 in close distance to an input element could be detected, the method proceeds to act S109. At act S109, the control unit 226 determines input element 216 as the input element having the greatest distance to the reference point 228 (or alternatively to the reference point 108) out of all input elements to which the hand 602 is in far distance or close distance since the distance of input element 216 to the reference point 228 (or alternatively to the reference point 108) is greater than the distance of input element 206 to the reference point. As can be seen in FIG. 2, input element 216 is located in the approaching zone 238 between radius 236 and radius 240 whereas input element 206 is located in approaching zone 230 having a smaller radius 232. Then, the method proceeds to act S110 and the control unit 226 determines that the hand 602 is in close distance to input element 206 instead of input element 216 being identified as the input element having the greatest distance to the reference point 228 (or alternatively to the reference point 108) out of all input elements to which the hand 602 is in far distance or close distance. Hence, the method proceeds to act S111 and the control unit 226 omits the input element 206 to which the hand 602 is in close distance. I. e., the control unit 226 does not execute the function assigned to input element 206 although the hand 602 is in close distance to input element 206 because the control unit 226 has detected that the hand 602 is in far distance to an input element (here input element 216) being more distant to the reference point 228 (or alternatively reference point 108) than input element 206. Due to the greater distance of input element 216 to the reference point 228 (or alternatively reference point 108), the input element 216 has a higher priority than input element 206 so that the function of the input element 206 is not (immediately) executed by the control unit 226. But the function of input element 206 would be executed if the operator would move his hand 602 out of the far distance 616 of the input element 216 as shown in FIG. 7A. After act S111, the method returns to act S104.

Then, the operator may move his hand 602 to a position as shown in FIG. 11A where his hand 602 is in close distance 610 to the input element 206 and also in close distance 618 to the input element 216 or to a position as shown FIG. 8A where his hand 602 touches the input element 206.

For example, the operator has moved his hand 602 to a position as shown in FIG. 11A. Correspondingly, signal P₂₀₆ exceeds the second threshold y2 and signal P₂₁₆ exceeds also the second threshold y2. The hand 602 may approach a little bit to the input element 210 but does not get in far distance 612 to input element 210. Hence, signal P₂₁₀ does not exceed the first threshold y1 (see FIG. 11B). So, the control unit 226 determines that the hand 602 is detected by the proximity sensor 110 (according to act S104) and that the hand 602 is in close distance 610 to the input element 206 and in close distance 618 to input element 216 (according to act S105). The control unit 226 detects no touch of one of the input elements according to act S106 so that the method proceeds to act S108.

At act S108, the control unit 226 determines that the hand 602 is in close distance to the input element 206 based on signal P₂₀₆ exceeding second threshold y2 and in close distance to the input element 216 based on signal P₂₁₆ also exceeding second threshold y2 (see FIG. 11B). Since a presence of the hand 602 in close distance to an input element could be detected, the method proceeds to act S109. At act S109, the control unit 226 determines the same result as determined at act S109 when the hand 602 was in a position as shown in FIG. 10A. So, input element 216 is determined as the input element having the greatest distance to the reference point 228 (or alternatively to the reference point 108) out of all input elements to which the hand 602 is in far distance or close distance. Then, the method proceeds to act S110 and the control unit 226 determines that the input element having the greatest distance to the reference point 228 (or alternatively to the reference point 108) out of all input elements to which the hand 602 is in far distance or close distance is the same input element as the input element to which the hand 602 is in close distance, namely input element 216. I. e., the control unit 226 determines that the hand 602 of the operator is in close distance to the input element determined at act S109. In response, this input element is defined as the "most distant closely approached input element". Hence, the method proceeds to act S112.

At act S112, the control unit 226 determines the approaching zone and/or the control module of the most distant closely approached input element, here input element 216. Additionally, the control unit 226 determines all other input elements of the same approaching zone and/or same control module to which the hand 602 is in close distance. The information about the assignment of each input element to an approaching zone and/or the assignment of each input element to a control module is saved in the memory 403 of the control unit 226 and can be retrieved by the controller 402. Hence, the control unit 226 can determine that input element 206 is located in approaching zone 230 and is part of the control module 204 and that input element 216 is located in approaching zone 238 and is part of control module 214. As a result, the control unit 226 determines that the input element 216 as the most distant closely approached input element is located in approaching zone 238 and/or that the input element 216 as the most distant closely approached input element is part of the control module 214 (see FIG. 2). Then, the control unit 226 determines all other input elements of the same approaching zone 238 to which the hand 602 is in close distance and/or all other input elements of the same control module 214 to which the hand 602 is in close distance. Then, the method proceeds to act S113.

For each of the most distant closely approached input element and the other input elements determined at act S112, the control unit 226 receives a signal P representing the proximity of the hand 602 to the corresponding input element. The closer the hand 602 is to the input element the more is the signal P increased. I. e., analogously to signal P₂₁₆ as shown in FIG. 11B, the control unit 226 receives signals P for the other input elements determined at act S112.

At act S113, the control unit 226 determines the strongest signal out of the signals received at act S112 and the input element to which the strongest signal is assigned. I. e., the control unit 226 determines the input element out of all input elements being part of the same approaching zone and/or control module of the most distant closely approached input element to which the hand 602 is in closest proximity. This input element may be the most distant closely approached input element itself or one of the other input elements determined at act S112. Then, the control unit 226 executes the function assigned to the input element to which the strongest signal is assigned. The function may be stored in the memory 403 of the control unit 226 and the controller 402 of the control unit 226 may read out the function for execution. The function may be any function as explained above. So, the function may (de-)activate any actuator or component of the agricultural machine or may control any actuator of the vehicle or implement of the agricultural machine, for example to adjust a height of the implement over the ground. After act S113, the method proceeds to act S114.

Acts S112 and S113 may be optional acts and may be skipped by the control unit 226. Then, the control unit 226 executes after act S110 the function of the most distant closely approached input element before the method proceeds to act S114.

Instead of moving his hand 602 from a position as shown in FIG. 10A to a position as shown in FIG. 11A, the operator may move his hand 602 to a position as shown in FIG. 8A and touch the input element 206 by his finger 604. In this case, the touch of the input element 206 is determined by the control unit 226 at act S106 and the method proceeds to act S107 as described above. The control unit 226 receives a signal from the input element 206 in response to the touch of the input element 206. Since the hand 602 is also in close distance 610 to the input element 206, the control unit 226 receives also a signal P₂₀₆ exceeding the threshold y2 (see FIG. 8B). Additionally, the operator may have moved his finger 606 of his hand 602 in close distance 618 to the input element 216 causing a signal P₂₁₆ exceeding y2, too.

At act S107, the control unit 226 executes the function assigned to the touched input element, here input element 206. The function may be stored in the memory 403 of the control unit 226 and the controller 402 of the control unit 226 may read out the function for execution. The function may be any function as explained above. Since a touch has precedence to any proximity detection of a hand, the control unit 226 executes the function of the input element 206 instead of input element 216 (see FIG. 8A) although input element 216 is more distant to the reference point 228 (or reference point 108) and the signal P₂₁₆ assigned to the input element 216 exceeds the threshold y2. Hence, the function assigned to the touched input element is executed by the control unit 226 irrespectively if the approaching hand 602 is in far distance (616) or close distance (618) to another input element as for example input element 216 as shown in FIG. 8A. After act S107, the method proceeds to act S114.

At act S114, the method ends. The method may be restarted again at act S100 by the control unit 226.

All references cited herein are incorporated herein in their entireties. If there is a conflict between definitions herein and in an incorporated reference, the definition herein shall control.

**LISTING OF DRAWING ELEMENTS**

| | | | |
|---|---|---|---|
| 102 | agricultural machine | 212 | input element |
| 104 | seat | 214 | control module |
| 106 | human machine interface | 216 | input element |
| 108 | reference point | 218 | control module |
| 110 | proximity sensor | 220 | input element |
| 202 | arm support | 222 | input element |
| 204 | control module | 224 | input element |
| 206 | input element | 226 | control unit |
| 208 | control module | 228 | reference point |
| 210 | input element | 230 | approaching zone |
| 232 | radius | | |
| 234 | approaching zone | | |
| 236 | radius | | |
| 238 | approaching zone | | |
| 240 | radius | | |
| 242 | approaching zone | | |
| 244 | radius | | |
| 401 | I/O interface | | |
| 402 | controller | | |
| 403 | memory | | |
| 602 | hand | | |
| 604 | finger | | |
| 606 | finger | | |
| 608 | far distance | | |
| 610 | close distance | | |
| 612 | far distance | | |
| 614 | close distance | | |
| 616 | far distance | | |
| 618 | close distance | | |

## Claims

1. A human machine interface (106) for controlling an agricultural machine (102), comprising
a first input element (206) being distant from a reference point (228);
a second input element (216) being more distant from the reference point (228) than the first input element (206);
a proximity sensor (110) for determining a distance between an approaching hand (602) and the first and/or second input element (206; 216); and
a control unit (226) configured for
checking for each input element (206, 216) whether the approaching hand (602) is in a far distance (608) or a close distance (610).

2. The human machine interface (106) of claim 1, wherein
the control unit (226) is configured for
executing a function assigned to the input element to which the approaching hand (602) is in close distance.

3. The human machine interface (106) of claim 1 or 2, wherein
the control unit (226) is configured for
omitting an execution of a function assigned to the first input element (206) to which the approaching hand (602) is in close distance (610) if the approaching hand (602) is in far distance (616) to the second input element (216).

4. The human machine interface (106) of claim 3, wherein
the control unit (226) is configured for
determining a touch of the first input element (206); and
executing the function assigned to the first input element (206) in response to the touch irrespectively if the approaching hand (602) is in far distance (616) to the second input element (216).

5. The human machine interface (106) of any one of claims 1 to 4, wherein
the control unit (226) is configured for
executing a function assigned to the second input element (216) if the approaching hand (602) is in close distance (610, 618) to the first input element (206) and the second input element (216).

6. The human machine interface (106) of any one of claims 1 to 5, wherein
the control unit (226) is configured for
determining a signal indicative of a distance between an input element (206, 210, 216) and the approaching hand (602).

7. The human machine interface (106) of any one of claims 1 to 6, comprising an arm support (202) for resting an arm of the operator; wherein
the first input element (206) is located in a first approaching zone (230);
the second input element (216) is located in a second approaching zone (238);
the first approaching zone (230) and the second approaching zone (238) being reachable by the hand (602) of the operator with his arm resting on the arm support (202); wherein
the control unit (226) is configured for
determining whether the input element determining the approaching hand (602) is located in a first approaching zone (230) or in the second approaching zone (238).

8. The human machine interface (106) of claim 7, wherein
the first approaching zone (230) is ring-segment shaped and concentric to the reference point (228);
the second approaching zone (238) is ring-segment shaped and concentric to the reference point (228) and of a greater reach than the first approaching zone (230).

9. The human machine interface (106) of claim 7 or 8, when referring back to claim 6, comprising
a third input element being located in the second approaching zone (238); wherein
the control unit (226) is configured for executing a function assigned to the second input element (216)
if the approaching hand (602) is in close distance to the third input element and to the second input element (216); and
if a distance between the second input element (216) and the approaching hand (602) is smaller than a distance between the third input element and the approaching hand (602).

10. The human machine interface (106) of any one of claims 1 to 9, wherein the first input element (206) is part of a first control module (204); and
the second input element (216) is part of a second control module (214); and
the control unit (226) is configured for
determining whether the input element determining the approaching hand (602) is part of the first control module (204) or part of the second control module (214).

11. The human machine interface (106) of claim 10, comprising
a fourth input element being part of the second control module (214); wherein
the control unit (226) is configured for executing a function assigned to the second input element (216)
if the approaching hand (602) is in close distance to the fourth input element and to the second input element (216); and
if a distance between the second input element (216) and the approaching hand (602) is smaller than a distance between the fourth input element and the approaching hand (602).

12. The human machine interface (106) of claim 10 or 11, wherein
the first and/or the second control module (204, 214) are a button control module, a rocker control module, a joystick control module, a knob control module or a lever control module.

13. The human machine interface (106) of any one of the preceding claims, comprising
a sensor configured to detect whether an operator is seated in the agricultural machine (102); wherein
the control unit (226) is configured for
activating a proximity function for determining an approaching hand (602) by the first input element (206) and the second input element (216) if an operator is seated; and
deactivating the proximity function if the operator is not seated.

14. The human machine interface (106) of any one of the preceding claims, comprising
a sensor configured to detect whether an arm is resting on an arm support (202) of the human machine interface (106); wherein
the control unit (226) is configured for
activating a proximity function for determining an approaching hand (602) by the first input element (206) and the second input element (216) if an arm on the arm support (202) is detected; and
deactivating the proximity function if an arm on the arm support (202) is not detected.

15. A method of determining an operator input on a human machine interface (106) comprising
a first input element (206) configured for determining an approaching hand (602); and
a second input element (216) configured for determining the approaching hand (602); the method comprising:
checking whether the approaching hand (602) is in a far distance (608) or a close distance (610) to the first input element (206); and
checking whether the approaching hand (602) is in a far distance (612, 616) or a close distance (614, 618) to the second input element (216).
